# DEMANDE DE BREVET EUROPEEN

(11) **EP 3 499 699 A1**
(43) Date de publication de la demande: **19.06.2019**
(21) Numéro de dépôt: 18212807.4
(22) Date de dépôt: 14.12.2018
(51) Int. Cl.: H02M 3/155

(54) **ALIMENTATION À DÉCOUPAGE ET SON PROCÉDÉ DE COMMANDE**

(30) Priorité: 18.12.2017 FR 1762374
(71) Demandeur: STMicroelectronics (Grenoble 2) SAS, 38000 Grenoble (FR)
(72) Inventeur: CHESNEAU, David, 38500 Voiron (FR); AMIARD, François, 38120 Proveysieux (FR)
(74) Mandataire: Cabinet Beaumont

(57) **Abrégé**

L'invention concerne un procédé de commande d'une alimentation à découpage comprenant des premières phases d'accumulation d'énergie (97) dans un élément inductif synchronisées avec un signal d'horloge (clk), et des deuxièmes phases d'accumulation d'énergie (93) dans l'élément inductif non synchronisées avec le signal d'horloge. L'invention concerne également une alimentation à découpage adaptée à mettre en oeuvre ce procédé.

## Description

### Domaine

La présente demande concerne de manière générale les circuits électroniques. Elle concerne plus particulièrement les convertisseurs d'énergie DC/DC, de type alimentation à découpage, qui convertissent une tension continue en une autre tension continue.

### Exposé de l'art antérieur

Dans une alimentation à découpage, une tension d'alimentation continue est découpée (ou hachée) en commutant des interrupteurs de manière à mettre en oeuvre des phases d'accumulation d'énergie dans un élément inductif et des phases de restitution, à une charge connectée à l'alimentation à découpage, de l'énergie accumulée dans cet élément.

Les alimentations à découpage connues présentent divers inconvénients.

### Résumé

Un mode de réalisation prévoit une alimentation à découpage qui pallie tout ou partie des inconvénients des alimentations à découpage usuelles.

Un mode de réalisation prévoit un procédé de commande d'une alimentation à découpage.

Ainsi, un mode de réalisation prévoit un procédé de commande d'une alimentation à découpage comprenant des premières phases d'accumulation d'énergie dans un élément inductif synchronisées avec un signal d'horloge, et des deuxièmes phases d'accumulation d'énergie dans l'élément inductif non synchronisées avec le signal d'horloge.

Selon un mode de réalisation, les premières phases font partie d'un mode de commande synchrone, et les deuxièmes phases font partie d'un mode de commande asynchrone.

Selon un mode de réalisation, un basculement d'un mode à l'autre est provoqué par la détection d'un phénomène transitoire.

Selon un mode de réalisation, le basculement est en outre conditionné par un signal représentatif d'un courant circulant dans l'élément inductif.

Selon un mode de réalisation, un basculement du mode de commande asynchrone au mode de commande synchrone est provoqué par une diminution d'une tension de sortie par rapport à une tension de consigne.

Selon un mode de réalisation, la diminution est détectée par une comparaison à un premier seuil d'un signal représentatif d'un écart entre la tension de sortie et la tension de consigne, de préférence obtenu au moyen d'un circuit mettant en oeuvre une fonction proportionnelle-intégrale-dérivée.

Selon un mode de réalisation, le mode de commande asynchrone comprend en outre, après chaque deuxième phase, une troisième phase de restitution d'énergie accumulée dans l'élément inductif.

Selon un mode de réalisation, la diminution est détectée pendant la troisième phase.

Selon un mode de réalisation, un basculement du mode de commande synchrone au mode de commande asynchrone est provoqué par une augmentation d'une tension de sortie par rapport à une tension de consigne.

Selon un mode de réalisation, l'augmentation est détectée par une comparaison à un deuxième seuil d'un signal représentatif d'un écart entre la tension de sortie et la tension de consigne, de préférence obtenu au moyen d'un circuit mettant en oeuvre une fonction proportionnelle-intégrale-dérivée.

Selon un mode de réalisation, le mode de commande synchrone comprend en outre, après chaque première phase, une quatrième phase de restitution d'énergie accumulée dans l'élément inductif.

Selon un mode de réalisation, l'augmentation est détectée pendant la quatrième phase.

Un autre mode de réalisation prévoit une alimentation à découpage adaptée à mettre en oeuvre le procédé ci-dessus.

Selon un mode de réalisation, l'alimentation à découpage comprend un élément inductif, un circuit de commutation couplé à une borne de l'élément inductif, et un circuit de commande du circuit de commutation.

Selon un mode de réalisation, le circuit de commande comporte une machine d'état asynchrone configurée pour fournir des signaux de commande au circuit de commutation.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 illustre schématiquement un mode de réalisation d'une alimentation à découpage ;
la figure 2 illustre schématiquement un mode de réalisation d'un circuit de commande de l'alimentation à découpage de la figure 1 ;
la figure 3 est un organigramme illustrant schématiquement un mode de réalisation d'un procédé de commande de l'alimentation à découpage de la figure 1 ;
la figure 4 représente de manière schématique des chronogrammes illustrant la mise en oeuvre du procédé de la figure 3, lors d'une augmentation du courant appelé par une charge ;
la figure 5 représente de manière schématique des chronogrammes illustrant la mise en oeuvre du procédé de la figure 3, lors d'une diminution du courant appelé par une charge ; et
la figure 6 est un organigramme illustrant schématiquement une variante de réalisation du procédé de commande de la figure 3.

### Description détaillée

De mêmes éléments ont été désignés par de mêmes références dans les différentes figures et, de plus, les diverses figures ne sont pas tracées à l'échelle. Par souci de clarté, seuls les éléments utiles à la compréhension des modes de réalisation décrits ont été représentés et sont détaillés.

Dans la description qui suit, sauf précision contraire, les expressions "approximativement", "sensiblement", et "de l'ordre de" signifient à 10 % près, de préférence à 5 % près.

Sauf précision contraire, lorsque l'on fait référence à deux éléments connectés entre eux, cela signifie que ces éléments sont directement connectés sans élément intermédiaire autre que des conducteurs, et lorsque l'on fait référence à deux éléments reliés ou couplés entre eux, cela signifie que ces deux éléments peuvent être directement reliés (connectés) ou reliés par l'intermédiaire d'un ou plusieurs autres éléments.

On prévoit de commander une alimentation à découpage en alternant entre un mode de commande synchrone et un mode de commande asynchrone. Plus particulièrement, on prévoit de basculer du mode de commande asynchrone vers le mode de commande synchrone lors de la détection d'un premier phénomène transitoire correspondant à une diminution de la tension de sortie de l'alimentation suite à une augmentation du courant appelé par la charge de l'alimentation, et, inversement, de basculer du mode synchrone vers le mode asynchrone lors de la détection d'un deuxième phénomène transitoire correspondant à une augmentation de la tension de la sortie de l'alimentation suite à une diminution du courant appelé par cette charge.

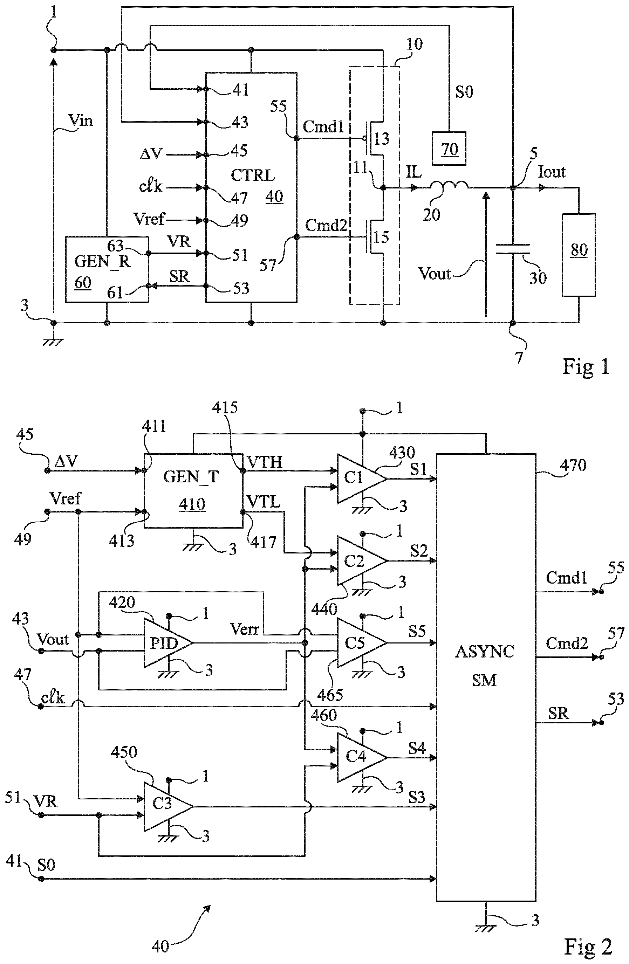

La figure 1 représente, de manière schématique, un mode de réalisation d'une alimentation à découpage.

L'alimentation à découpage comprend deux bornes d'entrée 1 et 3 destinées à recevoir une tension continue d'alimentation Vin, et deux bornes de sortie 5 et 7 destinées à fournir une tension continue de sortie Vout. La tension Vin est par exemple positive et référencée à la borne 3, typiquement la masse. La tension Vout est par exemple positive et référencée à la borne 7, la borne 7 étant ici connectée à la borne 3.

Un circuit de commutation 10 (en trait pointillé en figure 1) est connecté entre les bornes 1 et 3. Le circuit 10 comprend une borne de sortie 11. Le circuit 10 est configuré pour coupler la borne 11 sélectivement à la borne 1, à la borne 3 ou à aucune de ces deux bornes. Le circuit 10 comprend par exemple deux interrupteurs 13 et 15 connectés en série entre les bornes 1 et 3. Dans cet exemple, l'interrupteur 13 est un transistor MOS dont la source et le drain sont respectivement connectés aux bornes 1 et 11, et l'interrupteur 15 est un transistor MOS dont le drain et la source sont respectivement connectés aux bornes 3 et 11.

Un élément inductif 20 couple la borne 11 du circuit 10 à la borne 5 de l'alimentation à découpage. En outre, dans cet exemple, un élément capacitif 30, par exemple un condensateur, couple la borne de sortie 5 à la borne 7.

L'alimentation à découpage comprend un circuit de commande 40 (CTRL), par exemple alimenté par la tension Vin. Le circuit 40 comprend des bornes d'entrée 41, 43, 45, 47, 49 et 51, et des bornes de sortie 53, 55 et 57. La borne 41 est destinée à recevoir un signal S0 représentatif du courant IL circulant dans l'élément inductif 20, le signal S0 étant fourni par un capteur 70, par exemple un capteur de courant, associé à l'élément inductif 20. La borne 43 est couplée à la borne de sortie 5 de l'alimentation à découpage. La borne 45 est destinée à recevoir un signal ΔV représentatif d'une hystérésis à appliquer à une tension de référence. La borne d'entrée 47 est destinée à recevoir un signal binaire périodique ou signal d'horloge clk. La borne 49 est destinée à recevoir un signal Vref représentatif d'une tension de consigne. Une rampe de tension VR, par exemple référencée à la borne 3, est destinée à être appliquée sur la borne 51, et provient d'une borne de sortie 63 d'un générateur de rampe de tension 60. La borne de sortie 53 fournit un signal de commande SR à une borne d'entrée 61 du générateur de rampe 60. Les bornes 55 et 57 fournissent des signaux de commande Cmd1 et Cmd2 aux transistors 13 et 15 du circuit de commutation 10. A titre d'exemple, les signaux Cmd1 et Cmd2 sont des signaux binaires. Par exemple, l'état haut ou bas du signal Cmd1 commande l'état ouvert ou fermé de l'interrupteur 13, et l'état haut ou bas du signal Cmd2 commande l'état ouvert ou fermé de l'interrupteur 15. Dans l'exemple représenté, les bornes 55 et 57 sont connectées aux grilles des transistors respectifs 13 et 15.

Le générateur de rampe 60 (GEN_R) est par exemple alimenté par la tension Vin. A titre d'exemple, le signal SR est un signal binaire et le générateur 60 fournit des rampes croissantes de tension VR, chaque rampe débutant lors d'une commutation du signal SR d'un premier état binaire vers un deuxième état binaire et se terminant lors de la commutation suivante du signal SR du deuxième état binaire vers le premier état binaire, la tension VR étant nulle entre deux rampes successives et pouvant atteindre la valeur de la tension Vin lors d'une rampe.

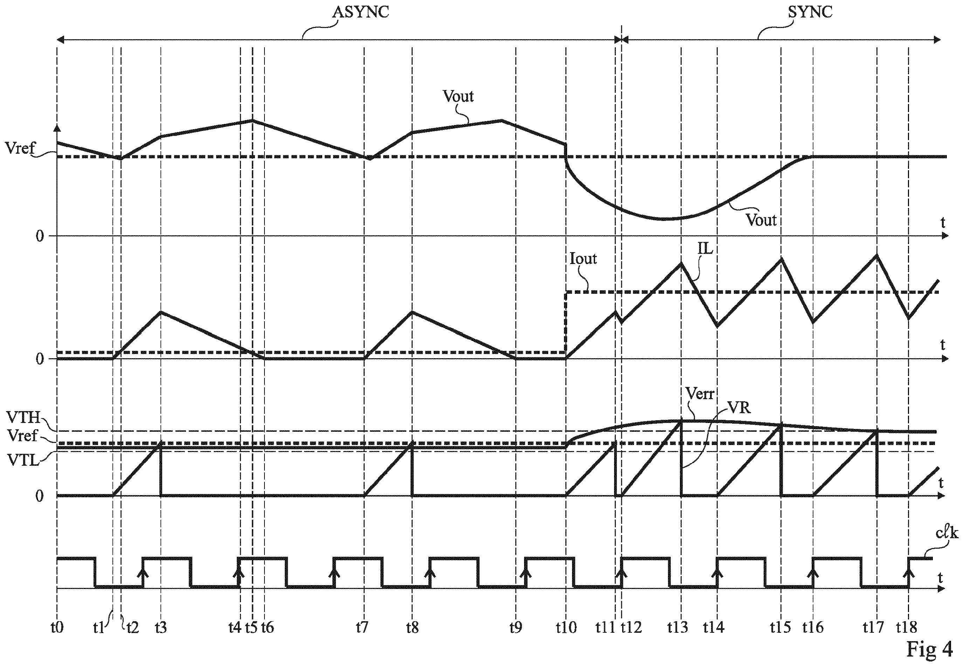

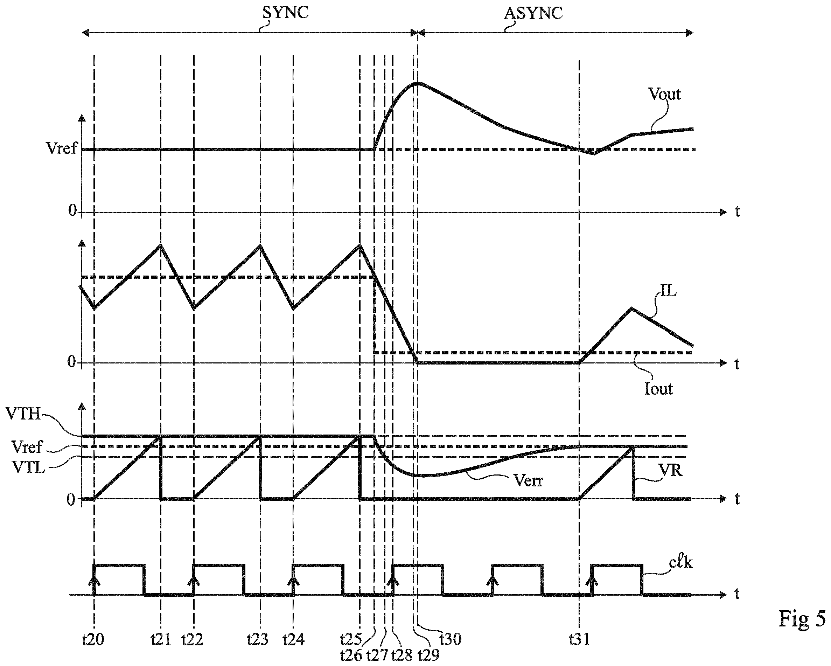

En fonctionnement, les signaux ΔV, clk et Vref sont fournis au circuit de commande 40, et une charge 80 est connectée à la borne de sortie 5, par exemple entre les bornes 5 et 7. Un courant Iout circule dans la charge 80. A titre d'exemple, le signal ΔV est une tension d'hystérésis, par exemple référencée à la borne 3, positive et inférieure à la tension Vin. Le signal Vref est par exemple une tension continue de consigne, par exemple référencée à la borne 3, positive et inférieure à la tension d'alimentation Vin. En fonction des valeurs des tensions Vout, Vref, ΔV et VR et des signaux S0 et clk disponibles sur ses bornes d'entrée, le circuit de commande 40 génère les signaux de commande Cmd1, Cmd2 et SR de manière à maintenir, aux bornes de l'ensemble de la charge 80 et de l'élément capacitif 30, une tension de sortie Vout continue et sensiblement égale à la tension de consigne Vref, qui, comme cela se voit sur les figures 4 et 5 décrites plus loin, a une valeur sensiblement constante représentative de la valeur visée pour la tension de sortie Vout. Plus particulièrement, quand les interrupteurs 13 et 15 sont respectivement fermé et ouvert, lors d'une phase d'accumulation d'énergie dans l'élément inductif 20, le courant IL augmente à mesure que de l'énergie est accumulée. A l'inverse, quand les interrupteurs 13 et 15 sont respectivement ouvert et fermé, lors d'une phase de restitution de tout ou partie de l'énergie accumulée dans l'élément inductif 20, le courant IL diminue à mesure que l'élément inductif 20 restitue l'énergie. En outre, si le courant IL est supérieur au courant Iout, l'élément capacitif 30 se charge, ce qui entraîne une augmentation de la tension Vout, et, si le courant IL est inférieur au courant Iout, l'élément capacitif 30 se décharge, ce qui entraîne une diminution de la tension Vout.

La figure 2 représente, de manière schématique, un mode de réalisation du circuit de commande 40 de la figure 1.

Le circuit 40 comprend un circuit 410 (GEN T) de génération de seuil, par exemple alimenté par la tension Vin. Le circuit 410 comprend une borne d'entrée 411 connectée à la borne 45 du circuit 40, et une borne d'entrée 413 connectée à la borne 49 du circuit 40. Le circuit 410 comprend en outre une borne de sortie 415 fournissant un premier seuil VTH, et une borne de sortie 417 fournissant un deuxième seuil VTL. Chacun des seuils VTH et VTL est représentatif d'un écart donné entre la tension de sortie Vout et la tension de consigne Vref. A titre d'exemple, le circuit 410 fournit une tension de seuil VTH, par exemple référencée à la borne 3 et égale à Vref+ΔV, et une tension de seuil VTL, par exemple référencée à la borne 3 et égale à Vref-ΔV.

Le circuit de commande 40 comprend, en outre, un circuit ou amplificateur 420 (PID) mettant en oeuvre une fonction proportionnelle-intégrale-dérivée, et des comparateurs 430 (C1), 440 (C2), 450 (C3), 460 (C4) et 465 (C5), l'amplificateur et chacun des comparateurs étant par exemple alimentés par la tension Vin.

L'amplificateur 420 comprend une borne de sortie et deux bornes d'entrée respectivement connectées aux bornes 43 et 49 du circuit 40. L'amplificateur 420 est configuré pour fournir, au niveau de sa borne de sortie, une tension Verr représentative de la différence entre les tensions Vout et Vref. Dans ce mode de réalisation, la tension Verr est par exemple égale à la tension Vref lorsque les tensions Vref et Vout sont égales, supérieure à la tension Vref lorsque la tension Vout est inférieure à la tension Vref, et inférieure à la tension Vref lorsque la tension Vout est supérieure à la tension Vref.

Le comparateur 430 comprend une borne de sortie et deux bornes d'entrée respectivement connectées à la borne de sortie de l'amplificateur 420 et à la borne de sortie 415 du circuit 410. Le comparateur 430 est configuré pour fournir, au niveau de sa borne de sortie, un signal S1 représentatif de la comparaison du signal Verr au seuil VTH. Dans ce mode de réalisation, le signal S1 est un signal binaire dont l'état haut ou bas indique si la tension Verr est supérieure ou non à la tension VTH.

De manière similaire, le comparateur 440 comprend une borne de sortie et deux bornes d'entrée respectivement connectées à la borne de sortie de l'amplificateur 420 et à la borne de sortie 417 du circuit 410. Le comparateur 440 est configuré pour fournir, au niveau de sa borne de sortie, un signal S2 représentatif de la comparaison du signal Verr au seuil VTL. Dans ce mode de réalisation, le signal S2 est un signal binaire dont l'état haut ou bas indique si la tension Verr est supérieure ou non à la tension VTL.

Le comparateur 450 comprend une borne de sortie et deux bornes d'entrée connectées aux bornes respectives 49 et 51 du circuit 40. Le comparateur 450 est configuré pour fournir, au niveau de sa borne de sortie, un signal S3 représentatif de la comparaison de la tension VR avec la tension de consigne Vref. Dans ce mode de réalisation, le signal S3 est un signal binaire dont l'état haut ou bas indique si la tension VR est supérieure ou non à la tension de consigne Vref.

Le comparateur 460 comprend une borne de sortie et deux bornes d'entrée respectivement connectées à la borne 51 du circuit 40 et à la borne de sortie de l'amplificateur 420. Le comparateur 460 est configuré pour fournir, au niveau de sa borne de sortie, un signal S4 représentatif de la comparaison de la tension VR avec la tension Verr. Dans ce mode de réalisation, le signal S4 est un signal binaire dont l'état haut ou bas indique si la tension VR est supérieure ou non à la tension Verr.

Le comparateur 465 comprend une borne de sortie et deux bornes d'entrée respectivement connectées aux bornes 43 et 49 du circuit 40. Le comparateur 465 est configuré pour fournir, au niveau de sa borne de sortie, un signal S5 représentatif de la comparaison de la tension Vout avec la tension Vref. Dans ce mode de réalisation, le signal S5 est un signal binaire dont l'état haut ou bas indique si la tension Vout est supérieure ou non à la tension Vref.

Le circuit 40 comprend, en outre, un circuit de machine d'état asynchrone 470 (ASYNC SM) dans laquelle les changements d'état ne sont pas nécessairement synchronisés avec un signal d'horloge. Le circuit 470 est par exemple alimenté par la tension Vin. En fonctionnement, la machine d'état 470 génère les signaux de commande Cmd1, Cmd2 et SR en fonction de l'état des signaux S0, S1, S2, S3, S4, S5 et clk. Ainsi, la machine d'état 470 comprend des bornes d'entrée connectées aux bornes d'entrée 41 et 47 du circuit 40, des bornes d'entrée connectées aux bornes de sortie des comparateurs 430, 440, 450, 460 et 465 et trois bornes de sortie respectivement connectées aux bornes de sortie 53, 55 et 57 du circuit 40.

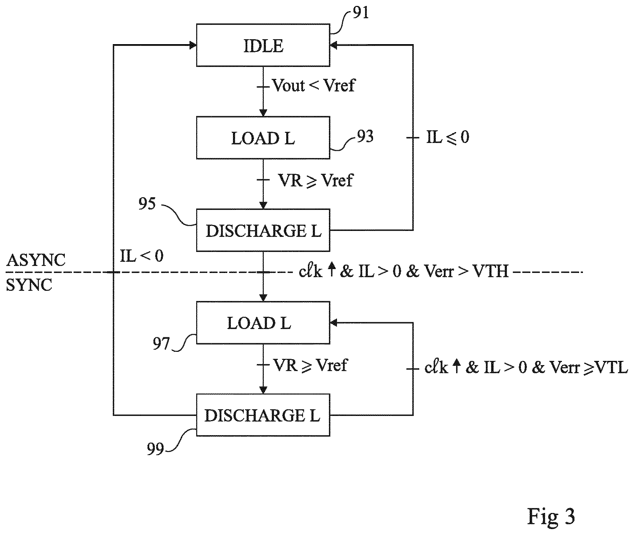

La figure 3 est un organigramme illustrant un mode de réalisation d'un procédé de commande de l'alimentation à découpage de la figure 1, et plus particulièrement un procédé de commande du circuit de commutation 10. Le procédé de commande est par exemple mis en oeuvre par le circuit de commande 40, et en particulier par la machine d'état asynchrone 470 du circuit 40.

A un état de repos 91 (bloc IDLE), par exemple l'état initial du procédé, aucune énergie n'est présente dans l'élément inductif 20, les interrupteurs 13 et 15 sont ouverts, et le générateur 60 est commandé de sorte qu'aucune rampe de tension VR n'est générée. La détection du fait que la tension de sortie Vout devient inférieure à la tension de consigne Vref (condition Vout<Vref) entraîne le passage de l'état 91 à un état 93 (bloc LOAD L) .

Le passage à l'état 93 entraîne le début d'une phase d'accumulation d'énergie dans l'élément inductif 20, cette phase d'accumulation n'étant pas synchronisée avec le signal d'horloge clk. Pour cela, le circuit 40 commande la fermeture de l'interrupteur 13, l'interrupteur 15 restant ouvert. En outre, le circuit 40 commande le début d'une rampe de tension VR. La détection du fait que la rampe de tension VR a atteint une valeur supérieure ou égale à celle de la tension Vref (condition VR≥Vref) entraîne le passage de l'état 93 à un état 95 (bloc DISCHARGE L).

Le passage à l'état 95 entraîne le début d'une phase de restitution d'énergie accumulée dans l'élément inductif 20 à l'ensemble de la charge 80 et de l'élément capacitif 30. Pour cela, à l'état 95, le circuit 40 commande l'ouverture de l'interrupteur 13 et la fermeture de l'interrupteur 15. En outre, lors du passage à l'état 95, le circuit 40 commande la fin de la rampe de tension VR.

A l'état 95, à chaque front montant du signal clk (clk↑), on vérifie si un premier phénomène transitoire (diminution de la tension Vout par rapport à la tension Vref) est détecté, la détection d'un tel phénomène transitoire étant conditionnée par un premier seuil, ici le seuil VTH. La détection d'un premier phénomène transitoire lors d'un front montant du signal clk entraîne le passage, lors de ce front, de l'état 95 à un état 97 (bloc LOAD L). Tant qu'aucun premier phénomène transitoire n'est détecté lors des fronts montants du signal clk, on reste dans l'état 95, d'où il résulte que le courant IL diminue progressivement jusqu'à s'annuler. La détection de l'annulation du courant IL (condition IL≤0) entraîne alors le passage de l'état 95 à l'état de repos 91.

Plus particulièrement, dans ce mode de réalisation, un premier phénomène transitoire est détecté si la tension Verr est supérieure à la tension de seuil VTH (Verr>VTH). Ainsi, le passage de l'état 95 à l'état 91 a lieu si la condition clk↑ & IL>0 & Verr>VTH est vérifiée, la vérification du fait que le courant IL est strictement positif (IL>0) permettant d'éviter le passage de l'état 95 à l'état 97 et à l'état 91 simultanément.

Le passage à l'état 97 entraîne le début d'une phase d'accumulation d'énergie dans l'élément inductif 20, cette phase d'accumulation étant alors synchronisée avec le signal d'horloge clk. Pour cela, à l'état 97, le circuit 40 commande la fermeture de l'interrupteur 13 et l'ouverture de l'interrupteur 15. En outre, le circuit 40 commande le début d'une rampe de tension VR. La détection du fait que la rampe de tension VR a atteint une valeur supérieure ou égale à celle de la tension Verr (condition VR≥Verr) entraîne le passage de l'état 97 à un état 99 (bloc DISCHARGE L).

Le passage à l'état 99 entraîne le début d'une phase de restitution d'énergie accumulée dans l'élément inductif 20. Le circuit 40 commande alors l'ouverture de l'interrupteur 13 et la fermeture de l'interrupteur 15. En outre, le circuit 40 commande la fin de la rampe de tension VR.

A l'état 99, à chaque front montant du signal clk (clk↑), on vérifie si un deuxième phénomène transitoire (augmentation de la tension Vout par rapport à la tension Vref) est détecté, la détection d'un tel phénomène transitoire étant conditionnée par un deuxième seuil, ici le seuil VTL. L'absence de détection d'un deuxième phénomène transitoire lors d'un front montant du signal clk entraîne le passage, lors de ce front, de l'état 99 à l'état 97, et donc le début d'une phase d'accumulation d'énergie synchronisée sur ce front. Tant qu'un deuxième phénomène transitoire est détecté lors des fronts montants du signal clk, on reste à l'état 99, d'où il résulte que le courant IL diminue progressivement jusqu'à s'annuler. La détection de l'annulation du courant IL (condition IL≤0) entraîne alors le passage de l'état 99 à l'état de repos 91.

Plus particulièrement, dans ce mode de réalisation, un deuxième phénomène transitoire est détecté si la tension Verr est inférieure à la tension VTL, l'absence de deuxième phénomène transitoire étant donc détectée si la tension Verr est supérieure à la tension VTL (Verr≥VTL). Ainsi, le passage de l'état 99 à l'état 97 a lieu si la condition clk↑ & IL>0 & Verr≥VTL est vérifiée, la vérification du fait que le courant IL est strictement positif (IL>0) permettant d'éviter le passage de l'état 99 à l'état 97 et à l'état 91 simultanément.

Le procédé décrit ci-dessus comprend donc un mode de commande ASYNC non synchronisé avec le signal clk et comportant les états 91, 93 et 95. Ce mode de commande ASYNC est similaire à un mode de commande couramment désigné par l'expression anglaise "pulse skipping mode". Le procédé comprend en outre un mode de commande SYNC synchronisé avec le signal clk, et comportant les états 97 et 99. Le mode de commande SYNC est similaire à un mode de commande synchrone de type à conduction continue, c'est-à-dire un mode de commande synchrone dans lequel un courant IL non nul circule en permanence dans l'élément inductif 20. En figure 3, le passage du mode SYNC au mode ASYNC et du mode ASYNC au mode SYNC est représenté schématiquement par un trait pointillé.

A titre d'exemple, les conditions susmentionnées entrainant le passage d'un état à un autre sont vérifiées par la machine d'état 470 du circuit 40. La condition Vout<Vref est par exemple vérifiée à partir du signal S5. La condition VR≥Vref est par exemple vérifiée à partir du signal S3. La condition IL≤0 est par exemple vérifiée à partir du signal S0. La condition clk↑ & IL>0 & Verr>VTH est par exemple vérifiée à partir des signaux clk, S0 et S1. La condition VR≥Verr est par exemple vérifiée à partir du signal S4. La condition clk↑ & IL>0 & Verr≥VTL est par exemple vérifiée à partir des signaux clk, S0 et S2.

Dans une variante de réalisation, le circuit 410 comprend une borne d'entrée supplémentaire couplée à la borne de sortie du comparateur 465 et n'a qu'une borne de sortie. Le circuit 410 est alors configuré pour fournir, au niveau de sa borne de sortie, le seuil VTH quand la tension Vout est inférieure à la tension Vref, et le seuil VTL quand la tension Vout est inférieure à la tension Vref. Cela permet de supprimer l'un des comparateurs 430 et 440, donc de réduire l'encombrement de l'alimentation à découpage.

Chacune des figures 4 et 5 représente des chronogrammes, tracés sans respect d'échelle et de manière schématique, illustrant des exemples d'allures des tensions Vref, Vout, Verr, VR, VTH et VTL, des courants IL et Iout et du signal d'horloge clk lors de la mise en oeuvre, dans l'alimentation à découpage de la figure 1, du procédé de la figure 3. Plus particulièrement, les figures 4 et 5 illustrent le fonctionnement de l'alimentation à découpage, respectivement lors d'un premier phénomène transitoire (diminution de la tension Vout par rapport à la tension Vref) et lors d'un deuxième phénomène transitoire (augmentation de la tension Vout par rapport à la tension Vref).

En figure 4, on considère à titre d'exemple le cas où, à un instant t0, le circuit de commande 40 est dans l'état 91 et la tension Vout aux bornes de l'ensemble de la charge 80 et de l'élément capacitif 20 est telle que la tension Verr est comprise entre les tensions Vref et VTL. Le courant IL est nul et inférieur au courant Iout, ce qui entraîne que la tension Vout diminue progressivement.

A un instant t1 postérieur à l'instant t0, la tension Vout devient inférieure à la tension Vref et le circuit 40 passe alors dans l'état 93. Ainsi, une rampe de tension VR débute et le courant IL augmente progressivement à partir de l'instant t1. Dès que le courant IL devient supérieur au courant Iout (instant t2), la tension Vout augmente progressivement.

A un instant t3 postérieur à l'instant t1, la tension VR devient supérieure à la tension Vref et le circuit 40 passe alors dans l'état 95. Cela entraîne la fin de la rampe de tension VR et la diminution progressive du courant IL à partir de l'instant t3, l'augmentation progressive de la tension Vout se poursuivant tant que le courant IL reste supérieur au courant Iout, ici jusqu'à l'instant t5.

A un instant t4 postérieur à l'instant t3 et correspondant à un front montant du signal clk, le circuit 40 est dans l'état 95 et le courant IL est positif. Toutefois, la tension Verr est inférieure à la tension de seuil VTH, ce qui indique l'absence de premier phénomène transitoire (diminution de la tension Vout par rapport à la tension Vref). Le circuit 40 reste alors dans l'état 95, donc dans le mode de commande ASYNC.

A partir de l'instant t5, la tension Vout diminue progressivement du fait que le courant IL est inférieur au courant Iout.

A un instant t6 postérieur aux instants t4 et t5, le courant IL s'annule et le circuit 40 passe dans l'état 91.

Le fonctionnement décrit en relation avec les instants t1, t3 et t6 est répété aux instants successifs respectifs t7, t8 et t9.

Dans le mode de commande ASYNC, le courant IL est maintenu à une valeur nulle entre une phase de restitution d'énergie (état 95) et une phase suivante d'accumulation d'énergie (état 93), par exemple ici entre les instants t6 et t7, ce qui permet de réduire les pertes dans l'alimentation à découpage par rapport au cas où celle-ci serait commandée selon un mode de commande dans lequel le courant IL continuerait à diminuer après avoir atteint une valeur nulle.

A un instant t10 postérieur à l'instant t9, le courant Iout augmente, d'où il résulte un premier phénomène transitoire. La tension Vout devient presque immédiatement inférieure à la tension Vref, ce qui entraîne le passage du circuit 40 de l'état 91 à l'état 93. Une rampe de tension VR débute et le courant IL augmente progressivement. En outre, la diminution de la tension Vout par rapport à la tension Vref entraîne l'augmentation de la tension Verr.

A un instant t11 postérieur à l'instant t10, la tension VR devient supérieure à la tension Vref et le circuit 40 passe dans l'état 95. Cela entraîne la fin de la rampe de tension VR et la diminution progressive du courant IL.

A un instant t12 postérieur à l'instant t11 et correspondant au front montant du signal clk suivant l'instant t10, le premier phénomène transitoire est détecté du fait que la tension Verr est supérieure à la tension VTH. Le circuit 40 passe de l'état 95 à l'état 97, c'est-à-dire du mode de commande ASYNC au mode de commande SYNC. Le passage du circuit 40 dans l'état 97 entraîne le début d'une rampe de tension VR et l'augmentation progressive du courant IL.

Dans le mode de commande ASYNC, la détection d'une diminution de la tension Vout par rapport à la tension Vref s'effectue indépendamment des fronts, ici montants, du signal clk. Il en résulte qu'il n'est pas nécessaire d'attendre un front montant du signal pour commander une phase d'accumulation d'énergie non synchronisée dans l'élément inductif 20 de manière à compenser la diminution de la tension Vout. Lorsque cette diminution de la tension Vout correspond au début d'un premier phénomène transitoire comme c'est le cas ici à l'instant t10, le premier phénomène transitoire est détecté lors du premier front montant du signal clk suivant, ici à l'instant t12, ce qui entraîne le passage du mode de commande ASYNC au mode de commande SYNC, et simultanément le début d'une nouvelle phase d'accumulation d'énergie dans l'élément inductif 20. Il en résulte une diminution de la durée du premier phénomène transitoire par rapport au cas où l'alimentation serait uniquement commandée de manière synchronisée avec le signal clk.

A un instant t13 postérieur à l'instant t12, la rampe de tension VR devient supérieure à la tension Verr et le circuit 40 passe dans l'état 99. Cela entraîne la fin de la rampe de tension VR et la diminution progressive du courant IL.

A un instant t14 correspondant au front montant du signal clk suivant l'instant t13, le courant IL est positif et la tension Verr est supérieure à la tension VTL, ce qui indique l'absence de deuxième phénomène transitoire (augmentation de la tension Vout par rapport à la tension Vref). Le circuit 11 passe dans l'état 97 et reste donc dans le mode de commande SYNC. Le passage dans l'état 97 entraîne le début d'une rampe de tension VR et l'augmentation progressive du courant IL.

A un instant t15 postérieur à l'instant t14, la rampe de tension VR devient supérieure à la tension Verr et le circuit 11 passe dans l'état 99. Pour chacune des périodes suivantes du signal clk, tant que la tension Verr reste supérieure à la tension VTL (absence de deuxième phénomène transitoire), le circuit 40 passe de l'état 99 à l'état 97 lors du front montant du signal clk (instants t16 et t18), et de l'état 99 à 97 lorsque la tension VR atteint la tension Verr (instant t17).

Dans le mode de commande synchrone SYNC (à partir de l'instant t12 en figure 4), la comparaison de la tension VR avec la tension Verr permet d'adapter, en fonction de l'écart entre les tensions Vout et Vref, pour chaque période du signal clk, la durée de l'état 97 par rapport à celle de l'état 99, et donc la durée pendant laquelle le courant IL est supérieur au courant Iout. Cela permet, après une ou plusieurs périodes du signal clk, de ramener puis de maintenir la tension Vout à une valeur sensiblement égale à celle de la tension Vref.

En figure 5, à un instant t20 correspondant par exemple à l'instant t18 de la figure 4, le circuit est dans l'état 99 du mode SYNC, la tension Vout est telle que la tension Verr est comprise entre les tensions Vref et VTH. Du fait que la tension Verr est supérieure à la tension VTL (absence de détection de deuxième phénomène transitoire), le front montant du signal clk ayant lieu à l'instant t20 entraîne le passage du circuit 40 de l'état 99 à 97. Des instants successifs suivants t21, t22, t23, t24 et t25 correspondent à des passages de l'état 97 à l'état 99 pour les instants t21, t23 et t25, et de l'état 99 à l'état 97 pour les instants t22 et t24 du fait que, aux instants t22 et t24, la tension Verr est supérieure à la tension VTL.

A un instant t26 postérieur à l'instant t25, le courant Iout diminue, d'où il résulte un deuxième phénomène transitoire (augmentation de la tension Vout par rapport à la tension Vref).

A un instant t27 postérieur à l'instant t26, l'augmentation de la tension Vout par rapport à la tension Vref est telle que la tension Verr devient inférieure à la tension de seuil VTL.

A un instant t28 postérieur à l'instant t27 et correspondant au front montant du signal clk suivant l'instant t26, le deuxième phénomène transitoire est détecté du fait que la tension Verr est inférieure à la tension VTL. Ainsi, le circuit 40 ne bascule pas de l'état 99 vers l'état 97, et reste dans l'état 99, d'où il résulte que la diminution progressive du courant IL amorcée à l'instant t25 se poursuit, jusqu'à ce que le courant IL devienne inférieur au courant Iout à un instant t29, puis s'annule à un instant t30 postérieur à l'instant t29. A partir de l'instant t29, la tension Vout diminue progressivement, ce qui permet de compenser son augmentation.

A l'instant t30, la détection de l'annulation du courant IL entraîne le passage de l'état 99 à l'état 91, donc du mode de commande SYNC au mode de commande ASYNC. Du fait qu'à l'état 91 le courant IL est maintenu à une valeur nulle, donc inférieure à celle du courant Iout, la diminution progressive de la tension Vout se poursuit, et la tension Vout se rapproche de la tension Vref.

A un instant t31 postérieur à l'instant t30, la tension Vout devient inférieure à la tension Vref, et le circuit 40 passe de l'état 91 à l'état 93 de manière similaire à ce qui a été décrit précédemment pour les instants t1 et t7 de la figure 4.

Dans l'état 99 du mode SYNC, et tant qu'un deuxième phénomène transitoire est en cours, aucun front montant du signal clk n'entraîne le passage de l'état 99 à l'état 97, et le courant IL diminue progressivement jusqu'à s'annuler. Autrement dit, aucune nouvelle phase d'accumulation d'énergie n'est mise en oeuvre tant qu'un deuxième phénomène transitoire est en cours. Cela permet de réduire la durée du deuxième phénomène transitoire par rapport au cas d'une alimentation uniquement commandée de manière synchrone dans laquelle chaque front montant du signal clk entraînerait le début d'une nouvelle phase d'accumulation d'énergie. En outre, lors d'un tel deuxième phénomène transitoire, la détection de l'annulation du courant IL entraînant le passage du mode de commande SYNC au mode de commande ASYNC (instant t30 en figure 5) entraîne également que la diminution du courant IL est immédiatement suivie d'une phase où le courant IL est maintenu à une valeur nulle (entre les instants t30 et t31) jusqu'à ce que la tension Vout devienne inférieure à la tension Vref. Cela permet de réduire encore la durée du deuxième phénomène transitoire.

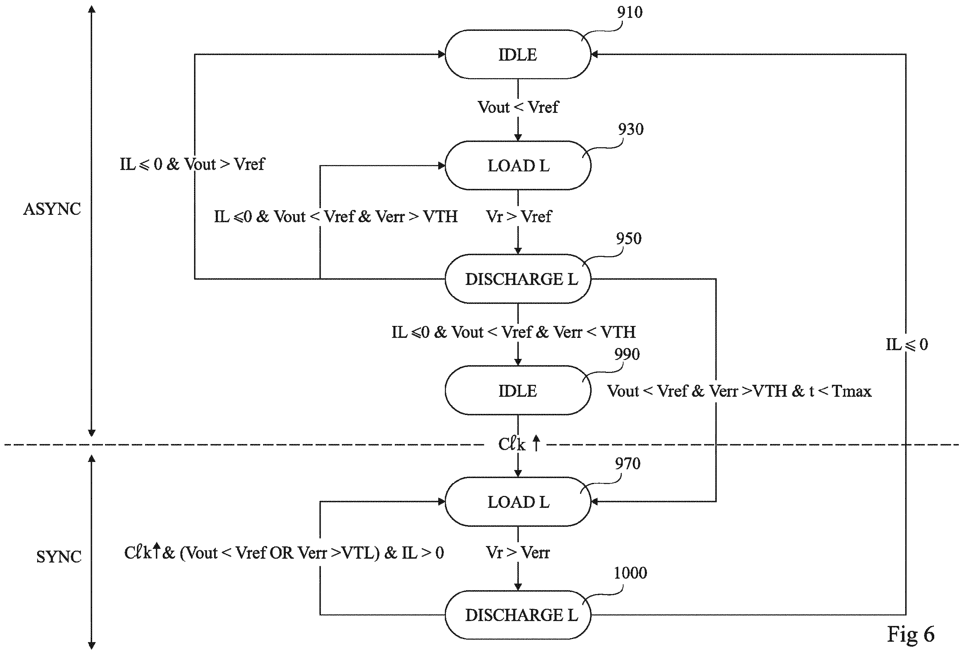

La figure 6 est un organigramme illustrant une variante de réalisation du procédé de commande décrit en relation avec la figure 3. Dans cette variante, par exemple mise en oeuvre par le circuit 40, de préférence par la machine d'état asynchrone 470, la détection d'un premier phénomène transitoire (diminution de la tension Vout par rapport à la tension Vref) est faite de manière à distinguer un premier phénomène transitoire brusque correspondant à une diminution rapide et importante de la tension Vout, d'un premier phénomène transitoire progressif correspondant à une diminution lente et/ou faible de la tension Vout. Dans cette variante, le passage du mode ASYNC vers le mode SYNC est alors effectué différemment selon que le premier phénomène transitoire est brusque ou progressif.

En pratique, un phénomène transitoire est dit brusque s'il entraîne que la tension Verr atteint des valeurs hors de l'hystérésis définie par le signal ΔV, et est dit progressif sinon. A titre d'exemple, un phénomène transitoire est dit brusque si il correspond à une variation de la tension Vout d'une amplitude de plus ou moins 5 % de la tension Vref dans un temps nettement inférieur à la période du signal clk, par exemple inférieur à 30 % de la période du signal clk, de préférence un temps compris entre 10 et 30 % de la période du signal clk, le phénomène transitoire étant dit progressif sinon.

A un état de repos 910 (bloc IDLE), par exemple l'état initial du procédé, aucune énergie n'est présente dans l'élément inductif 20, les interrupteurs 13 et 15 sont ouverts, et le générateur 60 est commandé de sorte qu'aucune rampe de tension VR n'est générée. La détection du fait que la tension de sortie Vout devient inférieure à la tension de consigne Vref (condition Vout<Vref) entraîne le passage de l'état 910 à un état 930 (bloc LOAD L) d'accumulation d'énergie dans l'élément inductif 20.

Le passage à l'état 930 entraîne le début d'une phase d'accumulation d'énergie et d'une rampe de tension VR. La détection du fait que la rampe de tension VR a atteint une valeur supérieure à celle de la tension Vref (condition VR>Vref) entraîne le passage de l'état 930 à un état 950 (bloc DISCHARGE L) de restitution de l'énergie accumulée dans l'élément inductif 20.

Le passage à l'état 950 entraîne le début d'une phase de restitution d'énergie à l'ensemble de la charge 80 et de l'élément capacitif 30, et la fin de la rampe de tension VR.

A l'état 950, pendant une période de temps Tmax suivant le moment où l'on passe à l'état 950, on vérifie si un premier phénomène transitoire brusque (diminution rapide et importante de la tension Vout par rapport à la tension Vref) est détecté, cette détection étant conditionnée par un premier seuil, ici le seuil VTH. Si un tel phénomène transitoire est détecté pendant cette période Tmax, on passe à un état 970 (bloc LOAD L) d'accumulation d'énergie dans l'élément inductif 20. La période Tmax est courte par rapport au temps nécessaire à la restitution de toute l'énergie accumulée dans l'élément inductif 20. A titre d'exemple, la période Tmax est inférieure à 10 %, de préférence à 5 %, du temps de restitution de toute l'énergie accumulée dans l'élément inductif 20 pendant une phase d'accumulation d'énergie se produisant en l'absence de phénomène transitoire. La période Tmax est par exemple comprise entre 30 et 35 ns. La vérification que le temps t qui s'est écoulé depuis le passage à l'état 950 est inférieur à la période Tmax (condition t<Tmax) peut être mise en oeuvre de différentes façons par l'homme du métier, par exemple au moyen d'une ligne de retard.

Le fait que le passage de l'état 950 vers l'état 970 ne puisse s'effectuer que pendant la période Tmax après le passage à l'état 950 permet d'assurer que l'on passe à l'état 970 avec un courant IL non nul dans l'élément inductif 20, d'où il résulte une diminution de la durée du premier phénomène transitoire par rapport au cas où le passage à l'état 970 serait effectué alors que le courant IL est nul.

A l'état 950, si la période de temps Tmax s'écoule sans qu'un premier phénomène transitoire brusque n'ait été détecté, on reste dans l'état 950 jusqu'à l'annulation du courant IL. Au moment où le courant IL s'annule (condition IL≤0), on vérifie si un premier phénomène (brusque ou progressif) est détecté ou non.

A l'état 950, si un premier phénomène transitoire brusque est détecté lorsque le courant IL s'annule, cela signifie que le premier phénomène transitoire brusque est arrivé trop tard pour être détecté pendant la période Tmax. On passe alors dans l'état 930 d'accumulation d'énergie. Ceci permet d'assurer qu'au début du prochain état 950, autrement dit pendant une période Tmax, on passe à l'état 970 avec un courant IL non nul dans l'élément inductif 20.

A l'état 950, si un premier phénomène transitoire progressif est détecté quand le courant IL s'annule, on passe dans un état de repos 990 (IDLE). La détection d'un premier phénomène transitoire progressif est conditionnée par le premier seuil VTH et par la tension de référence Vref. Le passage à l'état 990 entraîne la fin de la rampe de tension VR et l'ouverture des interrupteurs 13 et 15. A l'état 990, dès qu'un front montant du signal clk est détecté, on passe à l'état 970 de manière synchronisée avec le signal d'horloge.

A l'état 950, si aucun premier phénomène transitoire n'est détecté quand le courant IL s'annule, on passe à l'état de repos 910.

Dans le mode de réalisation illustré par la figure 6, un premier phénomène transitoire brusque est détecté si la tension Verr est supérieure à la tension de seuil VTH (Verr>VTH), et, de manière optionnelle, si la tension Vout est en outre inférieure à la tension Vref (Vout<Vref). Cette condition optionnelle permet par exemple de tenir compte d'éventuels retards introduits par les comparateurs et l'amplificateur du circuit 40. Ainsi, le passage de l'état 950 à l'état 970 a lieu si la condition Vout<Vref & Verr>VTH & t<Tmax est vérifiée, et le passage de l'état 950 à l'état 930 a lieu si la condition IL≤0 & Vout<Vref & Verr>VTH est vérifiée. Un premier phénomène transitoire progressif est par exemple détecté si la tension Vout est inférieure à la tension Vref mais que la tension Verr est inférieure à la tension VTH, autrement dit, si le premier phénomène transitoire détecté n'est pas brusque. Ainsi, le passage de l'état 950 à l'état 990 a lieu si la condition IL≤0 & Vout<Vref & Verr<VTH est vérifiée. Aucun premier phénomène transitoire n'est détecté si la tension Vout reste supérieure à la tension Vref, le passage de l'état 950 à l'état 910 s'effectuant alors si la condition IL≤0 & Vout>Vref est vérifiée.

Le passage à l'état 970 entraîne le début d'une phase d'accumulation d'énergie dans l'élément inductif 20 et le début d'une rampe de tension VR. La détection du fait que la tension VR devient supérieure à la tension Verr entraîne le passage de l'état 970 à un état 1000 (DISCHARGE L) de restitution de cette énergie accumulée dans l'élément inductif 20.

Le passage à l'état 1000 entraîne le début d'une phase de restitution de l'énergie et la fin de la rampe de tension VR.

A l'état 1000, à chaque front montant du signal clk (clk↑), on vérifie si un deuxième phénomène transitoire (augmentation de la tension Vout par rapport à la tension Vref) est détecté, cette détection étant conditionnée par un deuxième seuil, ici le seuil VTL. L'absence de détection d'un deuxième phénomène transitoire lors d'un front montant du signal clk entraîne le passage, lors de ce front, de l'état 1000 à l'état 970, et donc le début d'une phase d'accumulation d'énergie synchronisée sur ce front. Tant qu'un deuxième phénomène transitoire est détecté lors des fronts montants du signal clk, on reste à l'état 1000, d'où il résulte que le courant IL diminue progressivement jusqu'à s'annuler. La détection de l'annulation du courant IL (condition IL≤0) entraîne alors le passage de l'état 1000 à l'état de repos 910.

Dans le mode de réalisation illustré par la figure 6, un deuxième phénomène transitoire est détecté si la tension Verr est inférieure à la tension VTL, et, de manière optionnelle, si la tension Vout est en outre supérieure à la tension Vref. Autrement dit, aucun deuxième phénomène transitoire n'est détecté si la tension Verr est supérieure à la tension VTL, ou de manière optionnelle, si la tension Vout est inférieure à la tension Vref (condition Verr>VTL OR Vout<Vref). Ainsi, dans cet exemple, le passage de l'état 1000 à l'état 970 s'effectue si la condition clk↑ & (Verr>VTL OR Vout<Vref) & IL>0 est vérifiée, la vérification du fait que le courant IL est positif (condition IL>0) permettant d'éviter le passage de l'état 1000 à l'état 970 et à l'état 910 simultanément.

On notera que, dans la variante de réalisation décrite en relation avec la figure 6, de manière similaire au mode de réalisation décrit en relation avec la figure 3, toutes les phases d'accumulation synchronisées avec le signal d'horloge clk font partie du mode de commande synchrone comprenant les états 970 et 1000, le mode de commande asynchrone ASYNC (états 910, 930, 950 et 990) ne comprenant que des phases d'accumulation non synchronisées avec le signal d'horloge clk. Toutefois, à la différence du mode de réalisation décrit en relation avec la figure 3, dans la variante de réalisation décrite en relation avec la figure 6, le mode de commande SYNC peut comprendre une phase d'accumulation non synchronisée dont le début correspond au passage de l'état 950 à l'état 970.

Dans les modes de réalisation décrits ci-dessus, les phases d'accumulation d'énergie dans l'élément inductif 20, qu'elles appartiennent au mode de commande synchrone SYNC ou asynchrone ASYNC, résultent de commutations, et plus particulièrement de commutations du circuit de commutation 10 dont la borne de sortie 11 est connectée à une borne de l'élément inductif 20. Ainsi, dans les modes de commande synchrone SYNC et asynchrone ASYNC, l'alimentation fonctionne en découpage. Ce n'est par exemple pas le cas dans l'alimentation à découpage du document JP 2010/259222 qui, en autres, ne décrit pas de mode de commande asynchrone comprenant des phases d'accumulation d'énergie non synchronisées avec un signal d'horloge.

Dans les modes de réalisation décrits ci-dessus, on constate que l'alimentation à découpage est commandée selon le mode ASYNC pour des courants plus faibles que lorsqu'elle est commandée selon le mode SYNC. En outre, le bruit de commutation d'une alimentation à découpage diminue avec le courant appelé par sa charge. Ainsi, le bruit de commutation de l'alimentation commandée selon le mode ASYNC ne perturbe pas ou perturbe peu le fonctionnement d'autres circuits. Lorsque l'alimentation à découpage est commandée selon le mode SYNC, on prévoit de préférence que chaque commutation synchronisée sur le signal clk ayant lieu dans l'alimentation à découpage soit effectuée simultanément à une commutation ayant lieu dans un circuit synchrone susceptible d'être perturbé par le bruit de commutation de l'alimentation à découpage. Autrement dit, on prévoit que chaque front du signal clk provoquant une commutation dans l'alimentation à découpage se produise en même temps qu'un front d'un signal d'horloge provoquant une commutation dans le circuit synchrone à ne pas perturber. Le bruit de commutation de l'alimentation est alors confondu avec celui du circuit à ne pas perturber, d'où il résulte que le bruit de l'alimentation ne perturbe pas ou perturbe peu le fonctionnement de ce circuit. A titre d'exemple, le circuit à ne pas perturber est un circuit synchrone, par exemple un circuit formé dans et sur le même substrat semiconducteur que l'alimentation à découpage et/ou un circuit de la charge 80. A titre d'exemple, ce circuit synchrone est un convertisseur analogique-numérique (ADC) ou numérique-analogique (DAC). Le signal clk de l'alimentation est par exemple le signal d'horloge du circuit synchrone à ne pas perturber.

Par ailleurs, la fréquence des commutations pendant le mode ASYNC est, en pratique, plus faible que celle des commutations pendant le mode SYNC. La prévision du mode de commande ASYNC permet donc de réduire les pertes dans l'alimentation à découpage par rapport au cas où celle-ci serait uniquement commandée de manière synchronisée avec le signal clk.

Le fait que l'alimentation soit commandée en mode synchrone SYNC pour des courants plus forts que lorsqu'elle est commandée en mode asynchrone ASYNC résulte entre autres du fait que le basculement du mode asynchrone ASYNC au mode synchrone SYNC s'opère lors d'une diminution de la tension de sortie Vout par rapport à la tension de consigne Vref. En d'autres termes, le basculement s'opère quand le courant appelé par la charge augmente et passe d'une valeur faible à une valeur forte. Par ailleurs, le basculement du mode synchrone SYNC au mode asynchrone ASYNC s'opère lors d'une augmentation de la tension de sortie Vout par rapport à la tension de consigne Vref, c'est-à-dire quand le courant appelé par la charge diminue et passe d'une valeur forte à une valeur faible. Les documents EP 0849753 et US 2001/035745 ne décrivent pas, entre autres, qu'un basculement d'un mode de commande asynchrone comprenant des phases d'accumulation d'énergie non synchronisées avec un signal d'horloge à un mode de commande synchrone comprenant des phases d'accumulation d'énergie synchronisées avec le signal d'horloge s'opère quand une tension de sortie d'une alimentation à découpage diminue par rapport à une tension de consigne de l'alimentation.

Dans les modes de réalisation décrits ci-dessus, on comprend que le choix des seuils VTH et VTL ainsi que du gain de l'amplificateur 420 conditionne l'amplitude minimale pour qu'une diminution ou une augmentation de la tension Vout par rapport à la tension Vref soit détectée comme un phénomène transitoire. De préférence, la tension ΔV, donc les seuils VTH et VTL, sont proportionnels à la tension Vin, d'où il résulte que la détection d'un phénomène transitoire est également proportionnelle à la tension Vin. A titre d'exemple, le générateur 60 de rampe de tension VR comprend un circuit adapté à fournir une telle tension ΔV.

Dans les modes de réalisation décrits ci-dessus, la détection de phénomènes transitoires s'effectue en comparant la tension Verr avec les seuils VTH et VTL. On peut prévoir que cette détection soit effectuée en comparant directement la tension de sortie Vout avec les seuils VTH et VTL. Toutefois, dans le cas où l'amplificateur 420 est mis en oeuvre de manière que l'amplitude d'un écart entre les tensions Verr et Vref est supérieure à celle d'un écart correspondant entre les tensions Vout et Vref, la comparaison de la tension Verr plutôt que de la tension Vout avec les seuils VTH et VTL permet une détection plus précise des phénomènes transitoires.

La mise en oeuvre de l'amplificateur 420 et des comparateurs n'a pas été détaillée, l'homme du métier étant en mesure de réaliser ces éléments, par exemple avec des amplificateurs opérationnels éventuellement munis de boucles de contre-réaction, à partir de la description faite ci-dessus du fonctionnement de ces éléments.

L'homme du métier est également en mesure de concevoir le circuit de la machine d'état asynchrone 470 à partir de la description faite ci-dessus du fonctionnement de cette dernière.

Dans un mode de réalisation préférentiel des circuits décrits ci-dessus en relation avec les figures 1 et 2, le terme couplé signifie directement connecté, comme cela est représenté sur les figures correspondantes.

Des modes de réalisation particuliers ont été décrits. Diverses variantes et modifications apparaîtront à l'homme de l'art. En particulier, l'homme du métier est en mesure d'adapter le procédé et l'alimentation à découpage décrits ci-dessus au cas où la tension Verr augmente ou diminue quand la tension Vout, respectivement, augmente ou diminue contrairement à ce qui a été décrit ci-dessus où la tension Verr diminue ou augmente quand la tension Vout, respectivement, augmente ou diminue.

Le procédé décrit ci-dessus peut être adapté à des alimentations à découpage différentes de celle représentée en figure 1, par exemple à une alimentation à découpage prévue pour fournir une tension de sortie de valeur supérieure à celle de sa tension d'alimentation.

Bien que l'on ait décrit une alimentation à découpage comprenant un élément capacitif 30, dans des variantes de réalisation, cet élément capacitif ne fait pas partie de l'alimentation à découpage mais correspond à la capacité d'entrée de la charge 80.

## Revendications

1. Procédé de commande d'une alimentation à découpage comprenant des premières phases d'accumulation d'énergie (97 ; 970) dans un élément inductif (20) synchronisées avec un signal d'horloge (clk), et des deuxièmes phases d'accumulation d'énergie (93 ; 930) dans l'élément inductif (20) non synchronisées avec le signal d'horloge, les premières phases (97 ; 970) faisant partie d'un mode de commande synchrone (SYNC), les deuxièmes phases (93 ; 930) faisant partie d'un mode de commande asynchrone (ASYNC), et un basculement du mode de commande asynchrone (ASYNC) au mode de commande synchrone (SYNC) étant provoqué par une diminution d'une tension de sortie (Vout) par rapport à une tension de consigne (Vref).

2. Procédé selon la revendication 1, dans lequel un basculement d'un mode à l'autre est provoqué par la détection d'un phénomène transitoire.

3. Procédé selon la revendication 2, dans lequel le basculement est en outre conditionné par un signal représentatif d'un courant (IL) circulant dans l'élément inductif (20).

4. Procédé selon l'une quelconque des revendications 1 à 3, dans lequel la diminution est détectée par une comparaison à un premier seuil (VTH) d'un signal (Verr) représentatif d'un écart entre la tension de sortie (Vout) et la tension de consigne (Vref), de préférence obtenu au moyen d'un circuit (420) mettant en oeuvre une fonction proportionnelle-intégrale-dérivée.

5. Procédé selon l'une quelconque des revendications 1 à 4, dans lequel le mode de commande asynchrone (ASYNC) comprend en outre, après chaque deuxième phase (93 ; 930), une troisième phase (95 ; 950) de restitution d'énergie accumulée dans l'élément inductif (20).

6. Procédé selon la revendication 5, dans lequel la diminution est détectée pendant la troisième phase (95 ; 950).

7. Procédé selon l'une quelconque des revendications 1 à 6, dans lequel un basculement du mode de commande synchrone (SYNC) au mode de commande asynchrone (ASYNC) est provoqué par une augmentation d'une tension de sortie (Vout) par rapport à une tension de consigne (Vref).

8. Procédé selon la revendication 7, dans lequel l'augmentation est détectée par une comparaison à un deuxième seuil (VTL) d'un signal (Verr) représentatif d'un écart entre la tension de sortie (Vout) et la tension de consigne (Vref), de préférence obtenu au moyen d'un circuit (420) mettant en oeuvre une fonction proportionnelle-intégrale-dérivée.

9. Procédé selon l'une quelconque des revendications 1 à 8, dans lequel le mode de commande synchrone (SYNC) comprend en outre, après chaque première phase (97 ; 970), une quatrième phase (99 ; 1000) de restitution d'énergie accumulée dans l'élément inductif (20).

10. Procédé selon la revendication 9 prise dans sa dépendance à la revendication 7 ou 8, dans lequel l'augmentation est détectée pendant la quatrième phase (99 ; 1000).

11. Alimentation à découpage adaptée à mettre en oeuvre le procédé selon l'une quelconque des revendications 1 à 10.

12. Alimentation à découpage selon la revendication 11, comprenant un élément inductif (20), un circuit de commutation (10) couplé à une borne de l'élément inductif, et un circuit de commande (40) du circuit de commutation.

13. Alimentation à découpage selon la revendication 12, dans laquelle le circuit de commande (40) comporte une machine d'état asynchrone (470) configurée pour fournir des signaux de commande (Cmd1, Cmd2) au circuit de commutation (10).
